# EUROPEAN PATENT APPLICATION

(11) **EP 4 675 221 A1**
(43) Date of publication of application: **07.01.2026**
(21) Application number: 24763752.3
(22) Date of filing: 21.02.2024
(51) Int. Cl.: G01B 7/16

(54) **STRAIN GAUGE AND STRAIN SENSOR**

(30) Priority: 27.02.2023 JP 2023028342
(71) Applicant: Minebea Mitsumi Inc., Kitasaku-gun, Nagano 3890293 (JP)
(72) Inventor: KOMINE, Rieko, Kitasaku-gun, Nagano 389-0293 (JP); OGASA, Yosuke, Kitasaku-gun, Nagano 389-0293 (JP); ASAKAWA, Toshiaki, Kitasaku-gun, Nagano 389-0293 (JP); TAKEMI, Kazutoshi, Kitasaku-gun, Nagano 389-0293 (JP)
(74) Representative: Winter, Brandl - Partnerschaft mbB
(86) International application number: PCT/JP2024/006296
(87) International publication number: WO 2024/181271

(57) **Abstract**

A strain gauge includes a substrate, a resistor formed on the substrate, a pair of electrodes formed on the substrate, a first conductive line electrically connecting one end of the resistor and one of the pair of electrodes, and a second conductive line electrically connecting the other end of the resistor and the other electrode. Each of the first conductive line and the second conductive line has a terminal end portion on a side opposite to a side connected to the one electrode or the other electrode. The first conductive line or the second conductive line is connected to one end of the resistor at a position away from the terminal end portion, or the first conductive line and the second conductive line are connected to respective ends of the resistor at respective positions away from the terminal end portion.

## Description

### TECHNICAL FIELD

The present disclosure relates to a strain gauge and a strain sensor.

### BACKGROUND ART

Patent Document 1 discloses a strain gauge including a flexible substrate, a resistor formed on the substrate, and a pair of electrodes formed on the substrate and electrically connected to the resistor via conductive lines.

### RELATED ART DOCUMENTS

### PATENT DOCUMENT

[Patent Document 1] Japanese Unexamined
Patent Application Publication No. 2022-008026

### SUMMARY OF THE INVENTION

### PROBLEMS TO BE SOLVED BY THE INVENTION

When stress concentrates on a part of the strain gauge, a line breakage may occur.

The present disclosure provides a strain gauge that reduces an occurrence of line breakage.

### SOLUTION TO THE PROBLEMS

In one aspect of the disclosure, there is provided a strain gauge including a substrate, a resistor formed on the substrate, a pair of electrodes formed on the substrate, a first conductive line electrically connecting one end of the resistor and one of the pair of electrodes, and a second conductive line electrically connecting the other end of the resistor and the other electrode. Each of the first conductive line and the second conductive line has a terminal end portion on a side opposite to a side connected to the one electrode or the other electrode. The first conductive line or the second conductive line is connected to one end of the resistor at a position away from the terminal end portion, or the first conductive line and the second conductive line are connected to respective ends of the resistor at respective positions away from the terminal end portion.

### EFFECTS OF THE INVENTION

According to the strain gauge of the present disclosure, an occurrence of line breakage can be reduced.

### BRIEF DESCRIPTION OF THE DRAWINGS

[FIG. 1] FIG. 1 is a plan view illustrating a strain gauge according to a first embodiment.
[FIG. 2] FIG. 2 is a cross-sectional view illustrating the strain gauge according to the first embodiment.
[FIG. 3] FIG. 3 is a diagram illustrating a strain gauge of a comparative example.
[FIG. 4] FIG. 4 is a diagram illustrating a strain gauge according to the present embodiment.
[FIG. 5] FIG. 5 is a cross-sectional view illustrating the strain gauge according to the first embodiment.
[FIG. 6] FIG. 6 is a plan view illustrating a strain gauge according to a second embodiment.
[FIG. 7] FIG. 7 is a plan view illustrating a strain gauge according to a third embodiment.
[FIG. 8] FIG. 8 is a plan view illustrating a strain sensor according to a fourth embodiment.

### DESCRIPTION OF EMBODIMENTS

Hereinafter, embodiments for carrying out the invention will be described with reference to the drawings. In the drawings, the same components are denoted by the same reference numerals, and redundant description may be omitted.

In the following description and drawings, deviation in directions, such as parallel, perpendicular, orthogonal, horizontal, vertical, up and down, left and right, and front and rear directions, is allowed to the extent that the effects of the embodiment are not impaired. The shape of a corner is not limited to a right angle, and may be rounded. The terms "parallel", "perpendicular", "orthogonal", "horizontal", and "vertical" may include "substantially parallel", "substantially perpendicular", "substantially orthogonal", "substantially horizontal", and "substantially vertical", respectively.

For example, "substantially parallel" means that even if two lines or two surfaces are not completely parallel to each other, they can be treated as being parallel to each other as long as they are within a range allowed in manufacturing. As in the case of the term "substantially parallel", the terms "substantially perpendicular", "substantially orthogonal", "substantially horizontal", and "substantially vertical" are intended to respectively correspond to "perpendicular", "orthogonal", "horizontal", and "vertical" as long as the positional relationship between two lines or two surfaces is within a range allowed in manufacturing.

### <First Embodiment>

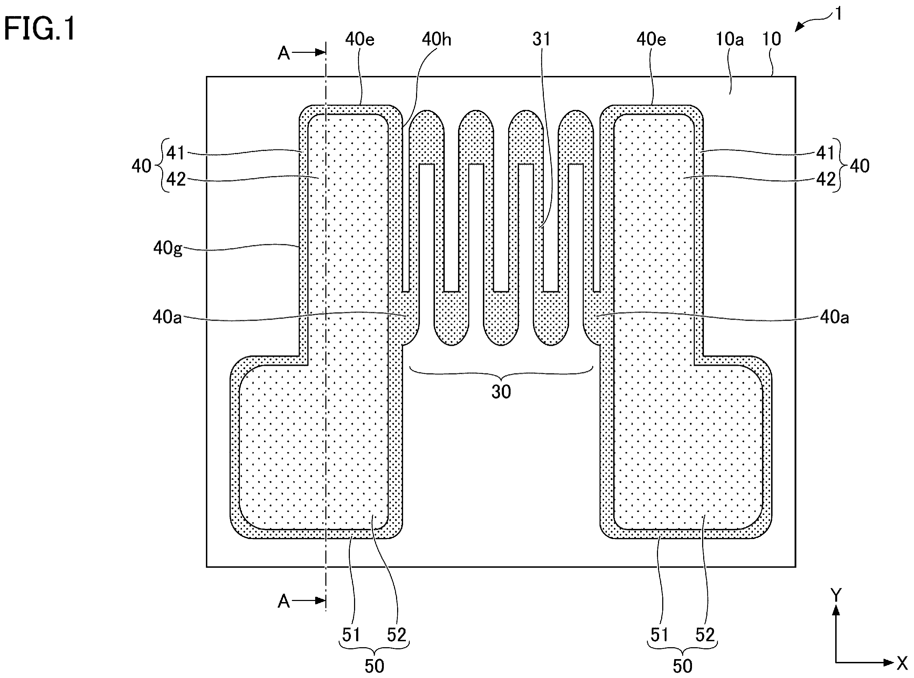

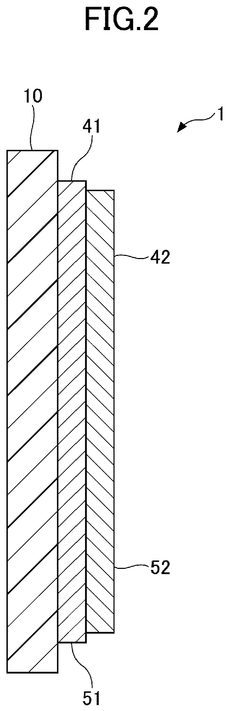

FIG. 1 is a plan view illustrating a strain gauge according to the first embodiment. FIG. 2 is a cross-sectional view illustrating the strain gauge according to the first embodiment. Specifically, FIG. 2 is a cross-sectional view taken along line A-A in FIG. 1. In the drawings, for convenience of description, an XY orthogonal coordinate system constituted by an X axis and a Y axis orthogonal to each other may be set. This coordinate system is defined for the sake of description, and does not limit the posture of the strain sensor or the like according to the present embodiment.

The strain gauge 1 includes a substrate 10, a resistor 30, a pair of conductive lines 40 (a first conductive line and a second conductive line), and a pair of electrodes 50.

In the present embodiment, for convenience, a side of the strain gauge 1 where the resistor 30 of the substrate 10 is provided will be referred to as an "upper side," and a side of the strain gauge 1 where the resistor 30 is not provided will be referred to as a "lower side" or "the other side". The surface of each portion on which the resistor 30 is provided is referred to as "one surface" or an "upper surface", and the surface on which the resistor 30 is not provided is referred to as "the other surface" or a "lower surface". However, the strain gauge 1 can be used in an upside-down state or can be arranged at any angle. In addition, a plan view refers to a view of an object from a normal direction of an upper surface 10a of the substrate 10, and a planar shape refers to a shape of an object viewed from the normal direction of the upper surface 10a of the substrate 10.

The substrate 10 serves as a base layer for forming the resistor 30 and the like, and has flexibility. The thickness of the substrate 10 is not particularly limited and may be appropriately selected in accordance with an intended purpose. For example, the thickness of the substrate 10 may be approximately 5 µm (micrometers) to 500 µm. In particular, the thickness of the substrate 10 is preferably 5 µm to 200 µm from the viewpoint of the transmissibility of strain from the surface of a flexure element, which is bonded to the lower surface of the substrate 10 via an adhesive layer or the like, and the dimensional stability against the environment, more preferably 10 µm or greater from the viewpoint of the insulation properties.

The substrate 10 may be formed of, for example, an insulating resin film such as a polyimide (PI) resin, an epoxy resin, a polyetheretherketone (PEEK) resin, a polyethylene naphthalate (PEN) resin, a polyethylene terephthalate (PET) resin, a polyphenylene sulfide (PPS) resin, a polyolefin resin, or the like. The "film" refers to a member having a thickness of about 500 µm or less and flexibility.

Herein, "formed of an insulating resin film" does not prevent the substrate 10 from containing a filler, an impurity, or the like in the insulating resin film. The substrate 10 may be formed of, for example, an insulating resin film containing a filler such as silica or alumina.

Examples of the material other than the resin of the substrate 10 include crystalline materials such as SiO₂, ZrO₂ (including yttria-stabilized zirconia (YSZ)), Si, Si₂N₃, Al₂O₃ (including sapphire), ZnO, and perovskite ceramics (CaTiO₃ and BaTiO₃), may further include non-crystalline glass, etc. As the material of the substrate 10, a metal such as aluminum, an aluminum alloy (duralumin), or titanium may be used. In this case, for example, an insulating film is formed on the substrate 10 made of metal.

The resistor 30 is a thin film formed in a predetermined pattern above the substrate 10, and is a sensitive part that undergoes a resistance change in response to a strain. The resistor 30 may be formed directly on the upper surface 10a of the substrate 10, or may be formed on the upper surface 10a of the substrate 10, with one or more other layers interposed between the resistor 30 and the upper surface 10a. In FIG. 1, the resistor 30 is illustrated in a dense dot pattern for convenience.

The resistor 30 may be formed of, for example, a material containing Cr (chromium), a material containing Ni (nickel), or a material containing both Cr and Ni. In other words, the resistor 30 can be formed of a material containing at least one of Cr and Ni. Examples of the material containing Cr include a Cr composite film. Examples of the material containing Ni include Cu-Ni (copper nickel). Examples of the material containing both Cr and Ni include Ni-Cr (nickel chromium).

Herein, the Cr composite film is a film in which Cr, CrN, Cr₂N, and the like are mixed. The Cr mixed phase film may contain unavoidable impurities such as chromium oxide and the like.

The thickness of the resistor 30 is not particularly limited and may be appropriately selected in accordance with an intended purpose. For example, the thickness of the resistor 30 may be approximately 0.05 µm to 2 µm. In particular, the thickness of the resistor 30 is preferably 0.1 µm or greater from the viewpoint of improving the crystallinity of the crystal constituting the resistor 30 (for example, the crystallinity of α-Cr), more preferably 1 µm or less from the viewpoint of reducing an occurrence of line breakage in the film constituting the resistor 30 and warpage of the film and detachment from the substrate 10, which are caused by an internal stress of the film. The width of the resistor 30 may be, for example, approximately 10 µm to 100 µm, in consideration of optimization with respect to required specifications, such as a resistance value and lateral sensitivity, and also in consideration of a countermeasure against line breakages.

For example, in the case where the resistor 30 is a Cr mixed phase film, the stability of the gauge characteristics can be improved by using α-Cr (alpha chromium), which has a stable crystal phase, as a main component. In the case where the resistor 30 is formed with α-Cr as the main component, the gauge factor of the strain gauge 1 can be set to 10 or more, and a gauge factor temperature coefficient TCS and a temperature coefficient of resistance TCR can be each set to be in the range of -1,000 ppm/°C to +1,000 ppm/°C. Herein, the term "main component" means that a target substance accounts for 50 wt.% or more of all materials constituting the resistor 30. Furthermore, in order to further improve the gauge characteristics, the resistor 30 contains α-Cr preferably in an amount of 80 wt.% or more, more preferably 90 wt.% or more. The α-Cr is Cr having a bcc structure (body-centered cubic lattice structure).

In the case where the resistor 30 is the Cr mixed phase film, CrN and Cr₂N included in the Cr mixed phase film are preferably at 20 wt.% or less. When CrN and Cr₂N included in the Cr mixed phase film are at 20 wt.% or less, it is possible to control against a decrease in the gauge factor.

The ratio of Cr₂N in CrN and Cr₂N is preferably equal to or more than 80 wt.% and less than 90 wt.%, more preferably equal to or more than 90 wt.% and less than 95 wt.%. When the ratio of Cr₂N in CrN and Cr₂N is equal to or more than 90 wt.% and less than 95 wt.%, the decrease in TCR (negative TCR) becomes more remarkable due to the Cr₂N having semiconductor-like properties. Furthermore, the risk of brittle fracture is reduced by reducing the transformation of a material into a ceramic phase.

In the case where a small amount of N₂ or atomic N is mixed and present in the film, when the N escapes from the film due to an external environmental factor (for example, being under a high-temperature environment), film stress changes as a consequence. Creating chemically stable CrN does not produce such unstable N but rather results in obtaining a stable strain gauge.

The resistor 30 has a zigzag structure as a whole in which a plurality of elongated portions 31 are arranged at predetermined intervals such that their longitudinal direction are aligned in the same orientation (the Y-axis direction in the example of FIG. 1) and the end portions of the adjacent elongated portions 31 are alternately connected to each other. In the example of FIG. 1, the longitudinal direction of the plurality of elongated portions 31 is a grid direction, and a direction (the X-axis direction in the example of FIG. 1) perpendicular to the grid direction is a grid width direction. In the example of FIG. 1, the outer periphery of a coupling portion between the elongated portions 31 is curved, but the shape of the coupling portion is not limited to this example. This is also the same in FIG. 2 and the drawings thereafter.

Among the elongated portions 31 of the resistor 30, two of the elongated portions 31 located at ends of the resistor 30 have the end portions that are bent in a direction of the adjacent conductive line 40 (the X-axis direction in the example of FIG. 1). The bent end portions (or simply "the end portions of the resistor", hereinafter) are formed of the same material as that of the elongated portions 31, and they are extended portions of the elongated portions 31.

The conductive lines 40 are formed on the substrate 10 and connect the resistor 30 and the electrodes 50. Each of the conductive lines 40 is not limited to a straight-line shape, and may be formed in any pattern. Each of the conductive lines 40 may have any width and any length. Each of the conductive lines 40 is formed of a first metal layer 41 and a second metal layer 42 stacked on the upper surface of the first metal layer 41. In FIG. 1, the first metal layer 41 is illustrated in the same dense dot pattern as the resistor 30 for convenience. The second metal layer 42 is indicated by a thinner dot pattern than the resistor 30.

In the example of FIG. 1, each of the conductive lines 40 extends along the Y-axis direction. In other words, a longitudinal direction of each of the conductive lines 40 is the Y-axis direction. In the descriptions hereinafter of the conductive lines 40 according to the present embodiment, specific portions of the conductive lines 40 are respectively named for convenience, but these portions of the conductive lines 40 are integrally formed.

Each of the conductive lines 40 includes a side portion 40h, a side portion 40g, a terminal end portion 40e, and a connection portion 40a. In a plan view, the side portion 40h is a side of the conductive line 40 on which the resistor 30 is formed. In a plan view, the side portion 40g is a side of the conductive line 40 on which the resistor 30 is not formed. The terminal end portion 40e is a terminal end portion of the conductive line 40 on the side opposite to the side connected to the electrode 50 (the positive Y-axis direction side in the example of FIG. 1). At least one of the pair of conductive lines 40 has the connection portion 40a at a position of the side portion 40h away from the terminal end portion 40e. In the example of FIG. 1, each of the two conductive lines 40 has the connection portion 40a at a position away from the terminal end portion 40e. The connection portion 40a is connected to the end portion of the resistor 30.

The shape of each conductive line 40 is not limited to the above-described example. For example, the conductive lines 40 need not be parallel to the Y-axis direction. For another example, the positional relationship between the two conductive lines 40 need not be parallel. For yet another example, the side portion of each conductive line 40 may be inclined in the Y-axis direction or may be a curved line.

One end (e.g., one end on the negative X direction side) of the resistor 30 and one electrode 50 (e.g., the electrode 50 on the negative X direction side) of the two electrodes 50 are electrically connected via the conductive line 40 (first conductive line). The other end of the resistor (e.g., one end on the positive X direction side) and the other electrode 50 (e.g., the electrode 50 on the positive X direction side) are also electrically connected via the conductive line 40 (second conductive line). In other words, the resistor 30 is electrically connected to the pair of electrodes 50 via the pair of conductive lines 40.

The electrodes 50 are electrodes for outputting a change in the resistance value of the resistor 30 caused by a strain, to outside. For example, lead lines or the like for external connection are joined to the electrodes 50. Each electrode 50 is formed on the substrate 10. The electrodes 50 are electrically connected to the resistor 30 via the conductive lines 40. The electrodes 50 may be formed in a substantially rectangular shape with a width larger than the width of the conductive lines 40, for example.

The electrodes 50 include a first metal layer 51 and a second metal layer 52 stacked on the upper surface of the first metal layer 51. The first metal layer 51 is electrically connected to the end portion of the resistor 30 via the first metal layer 41 of the conductive line 40. The first metal layer 51 is formed in a substantially rectangular shape in a plan view. The first metal layer 51 may be formed to have the same width as the conductive line 40.

Although the resistor 30, the first metal layer 41, and the first metal layer 51 are denoted by different reference numerals for convenience, they can be integrally formed of the same material in the same process. Therefore, the resistor 30, the first metal layer 41, and the first metal layer 51 have substantially the same thickness. Although the second metal layer 42 and the second metal layer 52 are denoted by different reference numerals for convenience, they can be integrally formed of the same material in the same process. Therefore, the second metal layer 42 and the second metal layer 52 may have substantially the same thickness.

The second metal layer 42 and the second metal layer 52 may be formed of respective materials each having a lower resistance than the resistor 30 (and the first metal layer 41 and the first metal layer 51). The materials of the second metal layer 42 and the second metal layer 52 are not particularly limited as long as they are materials each having a lower resistance than the resistor 30, and can be appropriately selected in accordance with an intended purpose. For example, when the resistor 30 is a Cr composite film, examples of the materials of the second metal layer 42 and the second metal layer 52 include Cu, Ni, Al, Ag, Au, Pt, etc., alloys of any of these metals, compounds of any of these metals, or laminated films in which any of these metals, alloys, and compounds are appropriately laminated. The thicknesses of the second metal layer 42 and the second metal layer 52 are not particularly limited and can be appropriately selected in accordance with an intended purpose. For example, the thickness of each of the second metal layer 42 and the second metal layer 52 may be about 3 µm to 5 µm.

The second metal layer 42 may be formed on a part of the first metal layer 41 or the entire first metal layer 41. The second metal layer 52 may be formed on a part of the first metal layer 51 or the entire first metal layer 51. One or more other metal layers may be further stacked on the upper surface of the second metal layer 52. For example, the second metal layer 52 may be a copper layer, and a gold layer may be stacked on the upper surface of the copper layer. Alternatively, the second metal layer 52 may be a copper layer, and a palladium layer and a gold layer may be sequentially stacked on the upper surface of the copper layer. By forming the uppermost layer of the electrodes 50 as a gold layer, the solder wettability of the electrodes 50 can be improved.

A cover layer may be provided on the upper surface 10a of the substrate 10 so as to cover the resistor 30 and the conductive lines 40 and expose the electrodes 50. The cover layer can prevent mechanical damage or the like from occurring in the resistor 30 and the conductive lines 40. The cover layer can protect the resistor 30 and the conductive lines 40 from moisture or the like. The cover layer may be provided so as to cover the entire portion of the upper surface 10a except for the portions where the electrodes 50 are formed.

The cover layer can be formed of an insulating resin, such as a PI resin, an epoxy resin, a PEEK resin, a PEN resin, a PET resin, a PPS resin, or a composite resin (for example, a silicone resin or a polyolefin resin). The cover layer may contain fillers or pigments. The thickness of the cover layer is not particularly limited and may be appropriately selected in accordance with an intended purpose. For example, the thickness of the cover layer may be approximately 2 µm to 30 µm.

As described above, the conductive lines 40 have a structure in which the second metal layer 42 is stacked on the first metal layer 41 made of the same material as the resistor 30. This structure makes the resistance of each conductive line 40 lower than the resistance of the resistor 30, and it is therefore possible to inhibit each conductive line 40 from functioning as a resistor. As a result, the strain detection accuracy of the resistor 30 can be improved.

In other words, by providing the conductive lines 40 having a resistance lower than the resistance of the resistor 30, the effective sensitive portion of the strain gauge 1 can be limited to a local region where the resistor 30 is formed. Therefore, the strain detection accuracy of the resistor 30 can be improved.

In particular, in a highly sensitive strain gauge having a gauge factor of 10 or greater using a Cr composite film as the resistor 30, limiting the effective sensitive portion to the local region where the resistor 30 is formed by making the resistance of the conductive line 40 lower than that of the resistor 30 exerts a remarkable effect on improvement of the strain detection accuracy. Making the resistance of the conductive lines 40 lower than the resistance of the resistor 30 also has an effect of reducing the lateral sensitivity.

The length of each of the conductive lines 40 connecting the resistor 30 and the electrodes 50 is preferably equal to or greater than 5 mm when measured along the line path, irrespective of whether the conductive line 40 is straight or bent. By setting the length to be equal to or greater than 5 mm, heat when lead wires or the like are soldered to the electrodes 50 is less likely to be transmitted to the resistor 30 and the cover layer covering the resistor 30, and the thermal load of various gauge characteristics can be reduced.

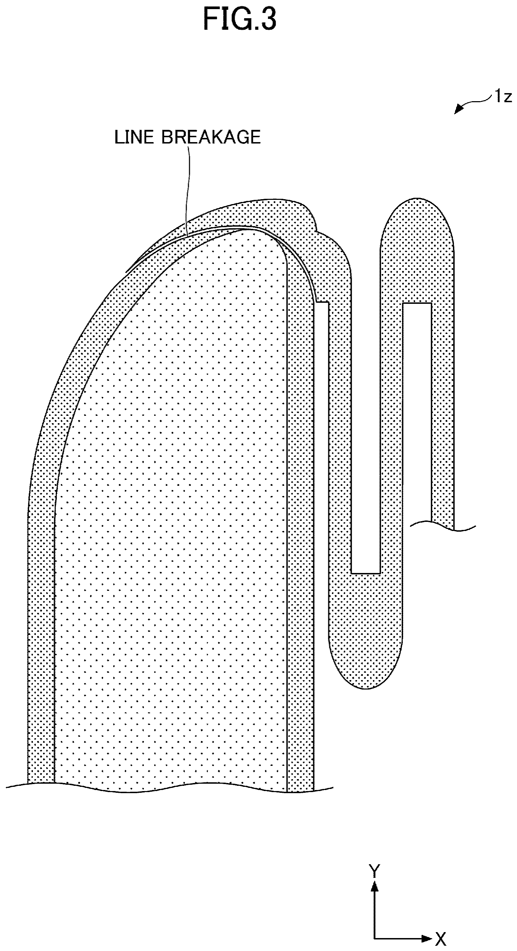

FIG. 3 is a diagram illustrating a strain gauge 1z of a comparative example. In FIG. 3, the area around the terminal end portion of the conductive line is illustrated in an enlarged manner. The strain gauge 1z has the same configuration as the strain gauge 1 illustrated in FIGS. 1 and 2 except that the connection position between the resistor and the conductive line is different from that of the strain gauge 1 and the shape of the conductive line is different from that of the strain gauge 1.

In the strain gauge 1z illustrated in FIG. 3, the conductive line is connected to the resistor at a position near the terminal end portion. In the strain gauge having such a shape, a line breakage may occur in either the connection portion of the conductive line, the resistor or both, as illustrated in FIG. 3 for example.

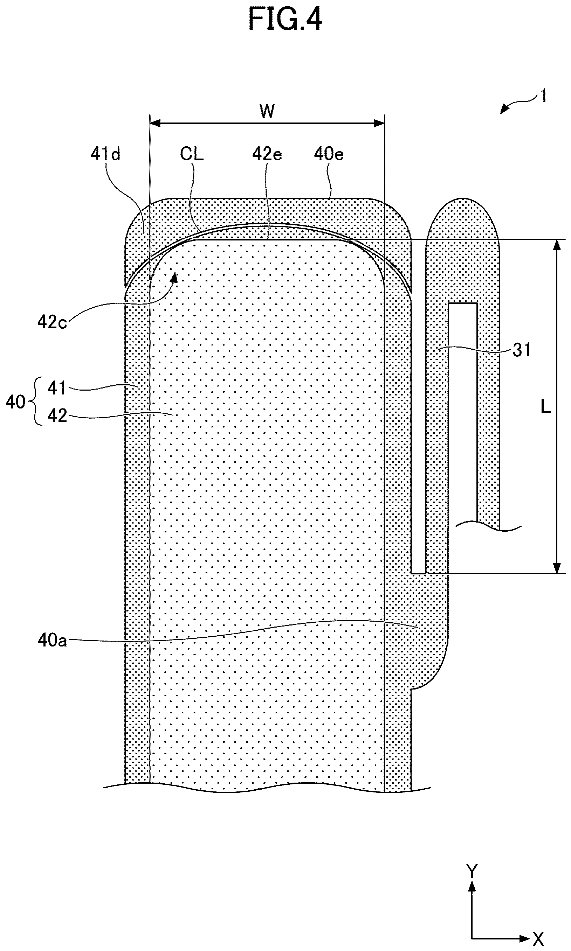

FIG. 4 is a diagram illustrating a case where a line breakage occurs in the strain gauge 1 according to the first embodiment. Although FIG. 4 illustrates the case where a line breakage occurs near the terminal end portion 40e of the conductive line 40 of the negative X-axis direction side in the strain gauge 1, the description hereinafter applies to the conductive line 40 and the terminal end portion 40e of the positive X-axis direction side.

For example, suppose a strong force is applied to the area around the terminal end portion 40e of the conductive line 40 for some reason, and a line breakage occurs as indicated by a curved line CL in FIG. 4. However, in the strain gauge 1, the resistor 30 and the conductive line 40 are connected to each other at a position away from the terminal end portion 40e, as illustrated in FIG. 4. For this reason, even if a line breakage occurs as indicated by the curved line CL and a part of the conductive line 40 becomes no longer electrically connected, the line breakage does not reach the connection portion between the conductive line 40 and the resistor 30. Therefore, no problem occurs in the conduction between the electrode 50 and the conductive line 40 and between the conductive line 40 and the resistor 30. By providing the connection portion between the conductive line 40 and the resistor 30 at a position away from the terminal end portion 40e as described in the foregoing, it is possible to realize a strain gauge in which a line breakage is less likely to occur in the connection portion.

For example, a distance L between the connection portion 40a and a terminal end portion 42e of the second metal layer 42 may be set to be equal to or greater than 30 µm. By setting the distance L to be equal to or greater than 30 µm, an occurrence of line breakage similar to the above-described case can be reduced with a higher probability. In other words, it is preferable that the conductive line 40 be connected to the resistor 30 at a position away from the terminal end portion 42e of the second metal layer 42 by 30 µm or greater.

Furthermore, in the strain gauge 1, the width W of the end side of the terminal end portion 42e of the second metal layer 42 is set to be wider than that of the comparative example, preferably 50 µm or greater in a plan view, for example. A line breakage often occurs at a narrow portion of a peripheral end portion of a line of the strain gauge, a power supply, a resistor, or the like. For this reason, an occurrence of line breakage can be reduced by increasing the width W. At least one of the corners 42c of the second metal layer 42 may be formed at a right angle or an obtuse angle in a plan view. By making at least one of the corners 42c a right angle or an obtuse angle, the corner of the terminal end portion 40e can be prevented from protruding narrowly. Therefore, it is possible to reduce an occurrence of line breakage at the corner portion of the terminal end portion 40e of the conductive line 40.

In order to manufacture the strain gauge 1, first, the substrate 10 is prepared, and a metal layer (for convenience, referred to as a "metal layer A") is formed on the upper surface 10a of the substrate 10. The metal layer A is a layer that is finally patterned to become the resistor 30, the first metal layer 41, and the first metal layer 51. Therefore, the material and thickness of the metal layer A are the same as those of the resistor 30, the first metal layer 41, and the first metal layer 51 described above.

The metal layer A can be formed, for example, by magnetron sputtering that uses a raw material capable of forming the metal layer A as a target. Instead of magnetron sputtering, the metal layer A may be formed by reactive sputtering, vapor deposition, arc ion plating, pulsed laser deposition, or the like.

From the viewpoint of stabilizing the gauge characteristics, a functional layer having a predetermined thickness may be vacuum-deposited as an underlayer on the upper surface 10a of the substrate 10 by, for example, a conventional sputtering method before the metal layer A is deposited.

In the present application, the "functional layer" refers to a layer having a function of promoting crystal growth of at least the metal layer A (resistor 30) which located above the functional layer. Preferably, the functional layer further has a function of preventing oxidation of the metal layer A due to oxygen and moisture contained in the substrate 10 and a function of improving adhesion between the substrate 10 and the metal layer A. The functional layer may further have other functions.

Since the insulating resin film constituting the substrate 10 contains oxygen and moisture, particularly in the case where the metal layer A contains Cr, Cr forms a self-oxidized film; it is therefore effective that the functional layer has a function of preventing oxidation of the metal layer A.

The material of the functional layer is not particularly limited and may be appropriately selected in accordance with an intended purpose, provided that the material has a function of promoting crystal growth of at least the metal layer A (resistor 30) as an upper layer. The material of the functional layer may include, for example, one or more metals selected from the group consisting of Cr (chromium), Ti (titanium), V (vanadium), Nb (niobium), Ta (tantalum), Ni (nickel), Y (yttrium), Zr (zirconium), Hf (hafnium), Si (silicon), C (carbon), Zn (zinc), Cu (copper), Bi (bismuth), Fe (iron), Mo (molybdenum), W (tungsten), Ru (ruthenium), Rh (rhodium), Re (rhenium), Os (osmium), Ir (iridium), Pt (platinum), Pd (palladium), Ag (silver), Au (gold), Co (cobalt), Mn (manganese), and Al (aluminum); an alloy of any metals among the group; or a compound of any metal among the group.

Examples of the alloy include FeCr, TiAl, FeNi, NiCr, and CrCu. Examples of the compound include TiN, TaN, Si₃N₄, TiO₂, Ta₂O₅, and SiO₂.

In the case where the functional layer is formed of a conductive material such as a metal or an alloy, it is preferable that the film thickness of the functional layer be equal to or less than 1/20 of the film thickness of the resistor. When the thickness is within such a range, crystal growth of α-Cr can be promoted, and at the same time, it is possible to prevent a portion of the current flowing through the resistor from flowing into the functional layer, thereby avoiding a reduction in strain detection sensitivity.

In the case where the functional layer is formed of a conductive material such as a metal or an alloy, it is more preferable that the film thickness of the functional layer be equal to or less than 1/50 of the film thickness of the resistor. When the thickness is within such a range, crystal growth of α-Cr can be promoted, and at the same time, it is possible to more effectively prevent a portion of the current flowing through the resistor from flowing into the functional layer, thereby avoiding a reduction in strain detection sensitivity.

In the case where the functional layer is formed of a conductive material such as a metal or an alloy, it is more preferable that the film thickness of the functional layer be equal to or less than 1/100 of the film thickness of the resistor. When the thickness is within such a range, it is possible to even more effectively prevent a current flowing through the resistor from flowing into the functional layer, thereby avoiding a reduction in strain detection sensitivity.

In the case where the functional layer is formed of an insulating material such as oxides or nitrides, it is preferable to set the thickness of the functional layer to be 1 nm (nanometers) to 1 µm. When the thickness is in such a range, the crystal growth of α-Cr can be promoted, and the functional layer can be easily formed without cracks.

In the case where the functional layer is formed of an insulating material such as oxides or nitrides, it is more preferable to set the thickness of the functional layer to be 1 nm to 0.8 µm. When the thickness is in such a range, the crystal growth of α-Cr can be promoted, and the functional layer can be more easily formed without cracks.

In the case where the functional layer is formed of an insulating material such as oxides or nitrides, it is much more preferable to set the thickness of the functional layer to be 1 nm to 0.5 µm. When the thickness is in such a range, the crystal growth of α-Cr can be promoted, and the functional layer can be much more easily formed without cracks.

The planar shape of the functional layer is patterned into substantially the same as the planar shape of the resistor illustrated in FIG. 1, for example. However, the planar shape of the functional layer is not limited as long as it is substantially the same as the planar shape of the resistor. In the case where the functional layer is formed of an insulating material, the functional layer does not need to be patterned into the same as the planar shape of the resistor. In this case, the functional layer may be solidly formed at least in a region where the resistor is formed. Alternatively, the functional layer 20 may be solidly formed on the entire upper surface of the substrate 10.

In addition, in the case where the functional layer is formed of an insulating material, the functional layer is formed to be relatively thick in such a manner that the thickness of the functional layer is equal to or greater than 50 nm and equal to or less than 1 µm, and is solidly formed; as a result, the thickness and the surface area of the functional layer are increased, and thus heat generated by the resistor can be dissipated to the substrate 10 side. As a result, in the strain gauge 1, it is possible to control against a decrease in measurement accuracy due to self-heating of the resistor.

The functional layer can be formed by vacuum deposition with a conventional sputtering method in which a raw material capable of forming the functional layer is used as a target and Ar (argon) gas is introduced into a chamber, for example. By using the conventional sputtering method, the functional layer is formed while the upper surface 10a of the substrate 10 is etched with Ar, and thus the adhesion improving effect can be obtained with a minimum amount of deposition of the functional layer.

This is merely an example of a method for forming a functional layer, and the functional layer may be formed by another method. For example, a method may be used in which an adhesion improving effect is obtained by activating the upper surface 10a of the substrate 10 through a plasma treatment or the like using Ar or the like before the functional layer is formed and the functional layer is subsequently formed in vacuum by a magnetron sputtering method.

The combination of the material of the functional layer and the material of the metal layer A is not particularly limited and may be appropriately selected in accordance with an intended purpose. For example, Ti may be used as the functional layer, and a Cr composite film containing α-Cr (alpha chromium) as a main component may be formed as the metal layer A.

In this case, the metal layer A can be formed by, for example, a magnetron sputtering method in which a raw material capable of forming a Cr composite film is used as a target and Ar gas is introduced into a chamber. Alternatively, the metal layer A may be formed by a reactive sputtering method using pure Cr as a target and introducing an appropriate amount of nitrogen gas into the chamber together with Ar gas. In this case, the ratio of CrN and Cr₂N contained in the Cr composite film and the ratio of Cr₂N in CrN and Cr₂N can be adjusted by changing the amount of nitrogen gas introduced or the pressure (partial pressure of nitrogen gas) or by providing a heat treatment step to adjust the heat treatment temperature.

In these methods, the growth surface of the Cr composite film is defined by the functional layer made of Ti, and a Cr composite film having a stable crystal structure and containing α-Cr as a main component can be formed. The gauge characteristics are improved by the diffusion of Ti constituting the functional layer into the Cr composite film. For example, the gauge factor of the strain gauge 1 can be set to 10 or more, and a gauge factor temperature coefficient TCS and a temperature coefficient of resistance TCR can be each set to be in the range of - 1,000 ppm/°C to +1,000 ppm/°C. In the case where the functional layer is formed of Ti, the Cr composite film may contain Ti or TiN (titanium nitride).

In the case where the metal layer A is a Cr composite film, the functional layer made of Ti has all of the function of promoting crystal growth of the metal layer A, the function of preventing oxidation of the metal layer A due to oxygen or moisture contained in the substrate 10, and the function of improving the adhesion between the substrate 10 and the metal layer A. The same applies to the case where Ta, Si, Al, or Fe is used as the functional layer instead of Ti.

By providing the functional layer under the metal layer A in the above-described manner, crystal growth of the metal layer A can be promoted, and the metal layer A having a stable crystal phase can be produced. As a result, the stability of the gauge characteristics can be improved in the strain gauge 1. Moreover, the gauge characteristics can be improved in the strain gauge 1 by diffusing a material that is a constituent of the functional layer into the metal layer A.

Next, the second metal layer 42 and the second metal layer 52 are formed on the upper surface of the metal layer A. The second metal layer 42 and the second metal layer 52 can be formed by, for example, a photolithography method.

Specifically, first, a seed layer is formed by, for example, a sputtering method, an electroless plating method, or the like so as to cover the upper surface of the metal layer A. Next, a photosensitive resist is formed on the entire upper surface of the seed layer, and is exposed and developed to form an opening that exposes a region where the second metal layer 42 and the second metal layer 52 are to be formed. At this time, the shape of the opening of the resist may be adjusted so that the second metal layer 42 and the second metal layer 52 can be formed in a discretionarily chosen shape. As the resist, for example, a dry film resist or the like can be used.

Next, the second metal layer 42 and the second metal layer 52 are formed on the seed layer exposed in the opening by, for example, an electrolytic plating method using the seed layer as a power feeding path. The electrolytic plating method is preferable in that takt time is high and an electrolytic plating layer with low stress can be formed as the second metal layer 42 and the second metal layer 52. By making the electrolytic plating layer having a large film thickness have low stress, it is possible to prevent the strain gauge 1 from warping. Alternatively, the second metal layer 42 and the second metal layer 52 may be formed by electroless plating.

Next, the resist is removed. The resist can be removed by, for example, immersing the resist in a solution capable of dissolving the material of the resist.

Next, a photosensitive resist is formed on the entire upper surface of the seed layer, and is exposed and developed to be patterned into the same planar shape as the resistor 30, the conductive lines 40, and the electrodes 50 in FIG. 1. As the resist, for example, a dry film resist or the like can be used. Then, the metal layer A and the seed layer exposed from the resist are removed using the resist as an etching mask, thereby forming the resistor 30, the conductive lines 40, and the electrodes 50 having the planar shape of FIG. 1.

For example, the unnecessary portions of the metal layer A and the seed layer can be removed by wet etching. In the case where the functional layer has been formed under the metal layer A, the functional layer is patterned into the planar shape illustrated in FIG. 1 by etching, similarly to the resistor 30, the conductive lines 40, and the electrodes 50. At this time, the seed layer is formed on the resistor 30, the first metal layer 41, and the first metal layer 51.

Next, the second metal layer 42 and the second metal layer 52 are formed by removing the unnecessary seed layer exposed from the second metal layer 42 and the second metal layer 52 using the second metal layer 42 and the second metal layer 52 as an etching mask. The seed layer directly below the second metal layer 42 and the second metal layer 52 remains. For example, the unnecessary seed layer can be removed by wet etching using an etchant that etches the seed layer but does not etch the functional layer, the resistor 30, the conductive lines 40, and the electrodes 50.

Thereafter, the cover layer that covers the resistor 30 and the conductive lines 40 and exposes the electrodes 50 is provided on the upper surface 10a of the substrate 10 as necessary, and the strain gauge 1 is thus completed. The cover layer can be produced by, for example, laminating a semi-cured thermoset insulating film on the upper surface 10a of the substrate 10 so as to cover the resistor 30 and the conductive lines 40 and expose the electrodes 50, and thereafter heating and curing the film. The cover layer may be produced by applying a liquid or paste of a thermoset insulating plastic to the upper surface 10a of the substrate 10 so as to cover the resistor 30 and the conductive lines 40 and expose the electrodes 50, and then heating and curing the thermosetting insulating plastic. The opening exposing the electrodes 50 can be formed by, for example, a photolithography method.

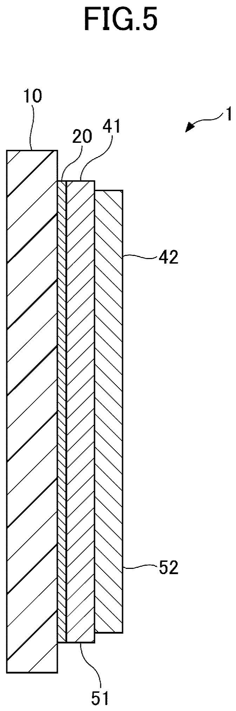

In the case where the functional layer is provided on the upper surface 10a of the substrate 10 as an underlayer of the resistor 30, the first metal layer 41, and the first metal layer 51, the strain gauge 1 has a cross-sectional shape illustrated in FIG. 5. The layer denoted by reference numeral 20 is the functional layer. The planar shape of the strain gauge 1 in the case where the functional layer 20 is provided is, for example, the same as that in FIG. 1. However, as described above, the functional layer 20 may be solidly formed on a part or the whole of the upper surface 10a of the substrate 10.

### <Second Embodiment>

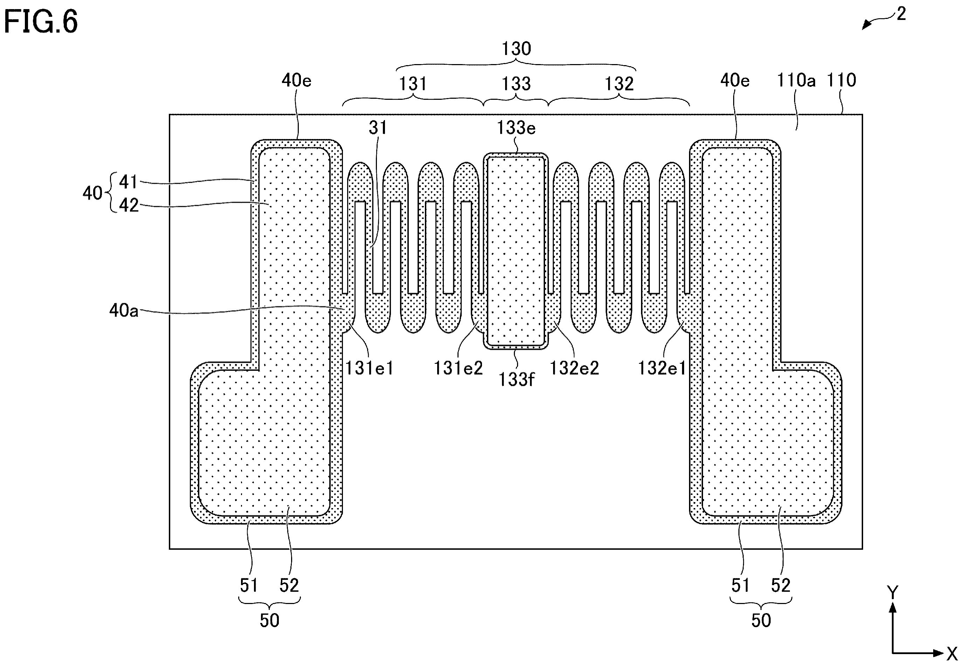

The resistor of the strain gauge according to the present disclosure may include a plurality of sensitive portions and a joint portion arranged between the plurality of sensitive portions. FIG. 6 is a plan view illustrating a strain gauge 2 according to the second embodiment. The strain gauge 2 is different from the strain gauge 1 in that the resistor 130 includes a first sensitive portion 131, a second sensitive portion 132, and a joint portion 133 arranged between the first sensitive portion 131 and the second sensitive portion 132.

The strain gauge 2 includes a substrate 110, a resistor 130, the conductive lines 40, and the electrodes 50. The resistor 130 and the conductive lines 40 are formed on an upper surface 110a of the substrate 110.

Since the substrate 110 has the same configuration as the substrate 10 except that the size is different, the description of the substrate 110 is omitted and the description of the substrate 10 is referred to. The description of the conductive lines 40 and the electrodes 50 is omitted hereinafter, and the description of these components in the first embodiment is referred to.

The resistor 130 includes the first sensitive portion 131, the second sensitive portion 132, and the joint portion 133. The first sensitive portion 131 has a zigzag structure as a whole in which a plurality of elongated portions 31 are arranged at predetermined intervals such that their longitudinal direction are aligned in the same orientation (the Y-axis direction) and the end portions of the adjacent elongated portions 31 are alternately connected to each other. One end portion 131e1 of the first sensitive portion 131 is electrically connected to the electrode 50 via the conductive line 40. The end portion 131e1 is connected to the conductive line 40 at the connection portion 40a. As illustrated, the connection portion 40a is away from the terminal end portion 40e of the conductive line 40. The other end portion 131e2 of the first sensitive portion 131 is electrically connected to the joint portion 133.

The second sensitive portion 132 has the same configuration as the first sensitive portion 131. In other words, the second sensitive portion 132 has a zigzag structure as a whole in which a plurality of elongated portions 31 are arranged at predetermined intervals such that their longitudinal direction are aligned in the same orientation (the Y-axis direction) and the end portions of the adjacent elongated portions 31 are alternately connected to each other. One end portion 132e1 of the second sensitive portion 132 is electrically connected to the electrode 50 via the conductive line 40. The end portion 132e1 is connected to the conductive line 40 at the connection portion 40a, and the connection portion 40a is away from the terminal end portion 40e of the conductive line 40. The other end portion 132e2 of the second sensitive portion 132 is electrically connected to the joint portion 133.

The joint portion 133 is arranged between the first sensitive portion 131 and the second sensitive portion 132. The joint portion 133 is a member made of the same material as the conductive lines 40. The joint portion 133 may be formed on the substrate 110 by the same method as the conductive lines 40. The shape and size of the joint portion 133 are not particularly limited.

The joint portion 133 may be connected to an end portion of the first sensitive portion 131 or an end portion of the second sensitive portion 132 or both (i.e., the end portion 131e2 or the end portion 132e2 or both) at a position away from each of a terminal end portion 133e and a terminal end portion 133f.

In the above example, the strain gauge 2 includes two sensitive portions. However, the number of the sensitive portions is not limited to two, and three or more sensitive portions may be provided. In this case, three or more sensitive portions are connected in series as the resistor, and the joint portion is provided between every two of the three or more sensitive portions.

In the strain gauge 2 according to the second embodiment, the resistor 130 is connected to the conductive lines 40 at positions away from the terminal end portions 40e, similarly to the strain gauge 1 according to the first embodiment. Therefore, the strain gauge 2 is also a strain gauge in which a line breakage is less likely to occur for the same reason as the strain gauge 1. Furthermore, in the strain gauge 2, the sensitive portion (the first sensitive portion 131 or the second sensitive portion 132 or both) of the resistor 130 is connected to the joint portion 133 at a position away from the terminal end portion 133e and the terminal end portion 133f of the joint portion 133. Therefore, according to the strain gauge 2, it is possible to realize a strain gauge in which a line breakage is unlikely to occur even in the area near the joint portion 133 (for example, the corner portions of the terminal end portions 133e and 133f of the joint portion 133).

### <Third Embodiment>

In the third embodiment, an example in which a third metal layer is arranged around the resistor 30 is illustrated. In the third embodiment, the description of the same components as those of the foregoing embodiments may be omitted.

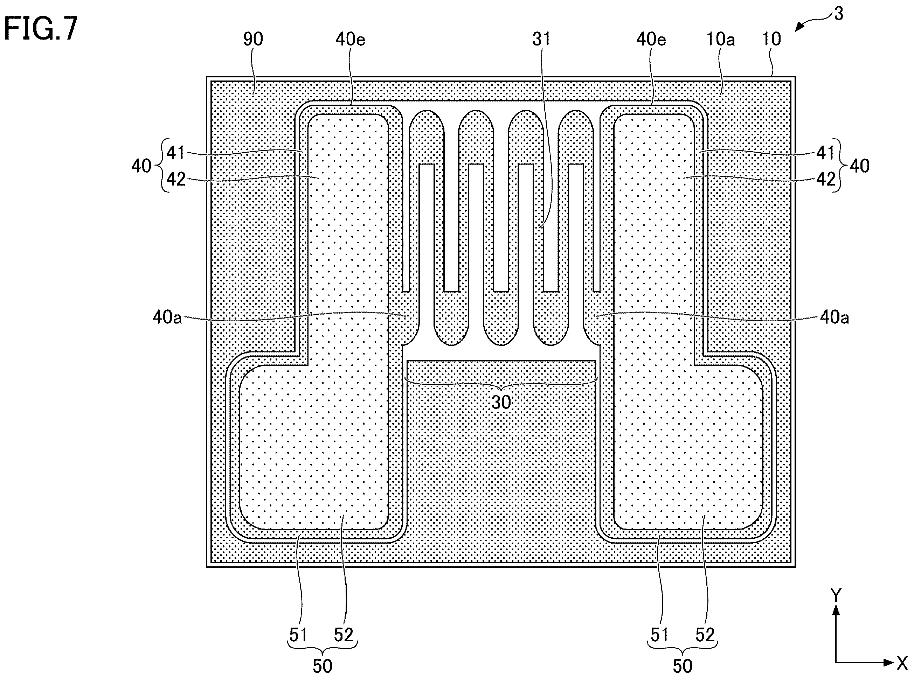

FIG. 7 is a plan view illustrating a strain gauge 3 according to the third embodiment. As illustrated in FIG. 7, the strain gauge 3 is different from the strain gauge 1 in that the strain gauge 3 includes a third metal layer 90 arranged around the resistor 30 and away from the resistor 30, the conductive lines 40, and the electrodes 50.

The third metal layer 90 is formed of the same material as the resistor 30. The third metal layer 90 can be formed in the same process as the resistor 30, the first metal layer 41, and the like. It is preferable that the third metal layer 90 be arranged in an extra space around the resistor 30 so as to have as large an area as possible. A metal layer made of the same material as the second metal layer 42 and the like may be stacked on the third metal layer 90.

In this manner, the third metal layer 90 is arranged around the resistor 30, and thus the rigidity of the strain gauge 3 can be further increased as compared with the strain gauge 1. By increasing the rigidity of the strain gauge 3, it is possible to reduce an occurrence of line breakage of the strain gauge 3.

According to the strain gauge of the third embodiment, even when stress is concentrated on the end portion of the line and on the area around the periphery of the resistor (for example, the vicinity of the joint portion 133), a line breakage of the strain gauge can be made less likely to occur. In addition, according to the strain gauge of the third embodiment provided with the third metal layer, the rigidity of the strain gauge is increased, and it is thereby possible to reduce an occurrence of line breakage of the strain gauge 3.

### <Fourth Embodiment>

In a fourth embodiment, an example of a strain sensor including a plurality of strain gauges will be described. In the strain sensor according to the fourth embodiment, the plurality of strain gauges form a bridge circuit by being connected to each other by sharing at least one of the electrodes of each strain gauge and at least one of the conductive lines of each strain gauge.

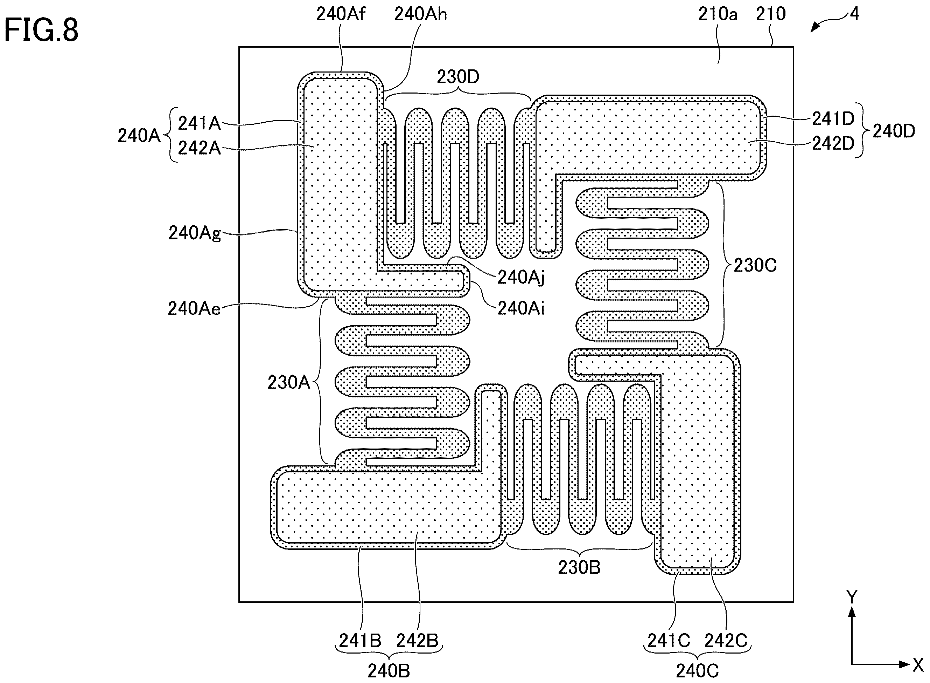

FIG. 8 is a plan view illustrating a strain sensor 4 according to the fourth embodiment. As illustrated in FIG. 8, the strain sensor 4 includes a substrate 210, a resistor 230A, a resistor 230B, a resistor 230C, a resistor 230D, a conductive line 240A, a conductive line 240B, a conductive line 240C, and a conductive line 240D. The resistor 230A, the resistor 230B, the resistor 230C, the resistor 230D, the conductive line 240A, the conductive line 240B, the conductive line 240C, and the conductive line 240D are formed on an upper surface 210a of the substrate 210.

Each of the conductive line 240A and the conductive line 240C extends along the Y-axis direction. In other words, each of the conductive line 240A and the conductive line 240C has a longitudinal direction in the Y-axis direction. Each of the conductive line 240B and the conductive line 240D extends along the X-axis direction. In other words, each of the conductive line 240B and the conductive line 240D has a longitudinal direction in the X-axis direction.

Although the electrodes of the strain sensor 4 are not explicitly illustrated in the example of FIG. 8, a part of the conductive line acts as the electrodes of the strain sensor 4 in the example of FIG. 8.

Each of the resistor 230A, the resistor 230B, the resistor 230C, and the resistor 230D may be formed of the same material in the same manner as the resistor 30 according to the first embodiment. Similarly, the conductive line 240A, the conductive line 240B, the conductive line 240C, and the conductive line 240D may be formed of the same material in the same manner as the conductive line 40 and the like according to the first embodiment.

The resistor 230A is connected to the conductive line 240A and the conductive line 240B. The resistor 230B is connected to the conductive line 240B and the conductive line 240C. The resistor 230C is connected to the conductive line 240C and the conductive line 240D. The resistor 230D is connected to the conductive line 240D and the conductive line 240A.

The conductive line 240A includes a first metal layer 241A and a second metal layer 242A stacked on the upper surface of the first metal layer 241A. The conductive line 240B includes a first metal layer 241B and a second metal layer 242B stacked on the upper surface of the first metal layer 241B. The conductive line 240C includes a first metal layer 241C and a second metal layer 242C stacked on the upper surface of the first metal layer 241C. The conductive line 240D includes a first metal layer 241D and a second metal layer 242D stacked on the upper surface of the first metal layer 241D.

The first metal layer 241A, the first metal layer 241B, the first metal layer 241C, and the first metal layer 241D may be formed of the same material in the same manner as the first metal layer 41. The second metal layer 242A, the second metal layer 242B, the second metal layer 242C, and the second metal layer 242D may be formed of the same material in the same manner as the second metal layer 42.

The shape of each of the conductive line 240B, the conductive line 240C, and the conductive line 240D, and the connection relationship of each of the conductive line 240B, the conductive line 240C, and the conductive line 240D with the resistor are the same as the shape of the conductive line 240A and the connection relationship of the conductive line 240A with the resistor, although the directions of these conductive lines are different. Therefore, the connection between each conductive line and the resistor according to the fourth embodiment will be described below using the conductive line 240A.

The conductive line 240A has a substantially L-shape in a plan view. The conductive line 240A has an end portion 240Ae, a side portion 240Ai, an end portion 240Aj, a side portion 240Ah, an end portion 240Af, and a side portion 240Ag in order from the end portion 240Ae.

The resistor 230A is connected to the end portion 240Ae. The position to which the resistor 230A is connected is a position away from each of the side portion 240Ag and the side portion 240Ai in the end portion 240Ae. The resistor 230D is connected to the side portion 240Ah. The position to which the resistor 230D is connected is a position away from each of the end portion 240Aj and the end portion 240Af in the side portion 240Ah.

For example, in the case where the electrodes are provided near the end portion 240Aj, the position to which the resistor 230D is connected is a position away from the end portion 240Ae (terminal end portion) in the side portion 240Ah. In other words, the conductive line 240A is an example of a configuration in which the plurality of strain gauges share at least one of the electrodes of each of the strain gauges and at least one of the conductive lines or the second conductive lines of each of the strain gauges.

According to the strain gauge of the fourth embodiment, an occurrence of line breakage can be reduced. According to the strain sensor of the fourth embodiment, even when stress is concentrated on the end portion of the conductive line, a line breakage of the strain gauge can be made less likely to occur.

It should be understood that the embodiments disclosed herein are illustrative and non-restrictive in every respect. The above-described embodiments may be omitted, replaced, or modified in various forms without departing from the scope and spirit of the appended claims.

This application claims priority to Japanese Patent Application No. 2023-028342 filed with the Japan Patent Office on February 27, 2023, the entire contents of which are incorporated herein by reference.

### REFERENCE SIGNS LIST

1, 2, 3 Strain gauge
4 Strain sensor
10, 110, 210 Substrate
30, 130 Resistor
40 Conductive line
40a Connection portion
40e Terminal end portion
41 First metal layer
42 Second metal layer
50 Electrode
51 First metal layer
52 Second metal layer
90 Third metal layer
131 First sensitive portion
132 Second sensitive portion
133 Joint portion
230A, 230B, 230C, 230D Resistor
240B, 240D, 240A, 240C Conductive line

## Claims

1. A strain gauge comprising:
a substrate;
a resistor formed on the substrate;
a pair of electrodes formed on the substrate;
a first conductive line electrically connecting one end of the resistor and one of the pair of electrodes; and
a second conductive line electrically connecting the other end of the resistor and the other electrode, wherein
each of the first conductive line and the second conductive line has a terminal end portion on a side opposite to a side connected to the one electrode or the other electrode,
the first conductive line or the second conductive line is connected to one end of the resistor at a position away from the terminal end portion, or the first conductive line and the second conductive line are connected to respective ends of the resistor at respective positions away from the terminal end portion.

2. The strain gauge according to claim 1,
wherein
the first conductive line and the second conductive line include
a first metal layer formed integrally with the resistor and formed of a same material as the resistor; and
a second metal layer formed on the first metal layer and made of a material having a lower resistance than the first metal layer, and
each of the first metal layer and the second metal layer has the terminal end portion.

3. The strain gauge according to claim 2,
wherein
the terminal end portion of the second metal layer of at least one of the first conductive line or the second conductive line has an obtuse angle in a plan view.

4. The strain gauge according to claim 2,
wherein
the terminal end portion of the second metal layer of at least one of the first conductive line or the second conductive line has a right angle in a plan view.

5. The strain gauge according to any one of claims 2 to 4, wherein
an end side of the terminal end portion of the second metal layer has a width of 50 µm or greater in a plan view.

6. The strain gauge according to any one of claims 2 to 5, wherein
one of the first conductive line and the second conductive line is connected to the resistor at a position away from the terminal end portion of the second metal layer by 30 µm or greater, or both of the first conductive line and the second conductive line are connected to the resistor at respective positions away from the terminal end portions of the second metal layers by 30 µm or greater.

7. The strain gauge according to any one of claims 1 to 6, wherein
a third metal layer arranged around the resistor and away from the resistor, the first conductive line, and the second conductive line.

8. The strain gauge according to any one of claims 1 to 7, wherein
the resistor includes
a plurality of sensitive portions; and
a joint portion arranged between the sensitive portions and made of a same material as the first conductive line and the second conductive line.

9. The strain gauge according to claim 8,
wherein
each of the sensitive portion is connected to the joint portion at a position away from an end portion of the joint portion.

10. A strain sensor comprising a plurality of the strain gauge according to any one of claims 1 to 9,
wherein
the plurality of strain gauges form a bridge circuit by being connected to each other by sharing at least one of the electrodes of each of the strain gauges and at least one of the first conductive line and the second conductive line of each of the strain gauges.
